# EUROPEAN PATENT SPECIFICATION

(11) **EP 2 057 003 B1**
(45) Date of publication and mention of the grant of the patent: **02.02.2011**
(21) Application number: 07814020.9
(22) Date of filing: 13.08.2007
(51) Int. Cl.: B29D 11/00

(54) **METHOD AND APPARATUS FOR HYDRATING A CONTACT LENS**
VERFAHREN UND VORRICHTUNG ZUR BEFEUCHTUNG EINER KONTAKTLINSE
MÉTHODE ET APPREIL D'HYDRATATION DE VERRES DE CONTACT

(30) Priority: 01.09.2006 US 515075
(43) Date of publication of application: 13.05.2009
(73) Proprietor: Bausch & Lomb Incorporated, Rochester, NY 14604-2701 (US)
(72) Inventor: CLARK, Stuart, Scotland ML11 PAE (GB); WILSON, Scott, Glasgow Scotland G74 4SN (GB)
(74) Representative: Glas, Holger
(86) International application number: PCT/US2007/075776
(87) International publication number: WO 2008/027713

(56) References cited:
- EP-A- 1 048 443
- EP-A- 1 553 439
- WO-A-2005/011966
- US-A- 5 848 514

## Description

### Background

In the manufacture of soft, hydrogel contact lenses, the lenses are typically hydrated and packaged in an aqueous solution. The lenses may also be extracted in an aqueous solution to remove undesired, residual material remaining from polymerization of the monomer mixture used to cast the contact lens. Extraction may be performed prior to, or concurrent with, hydration.

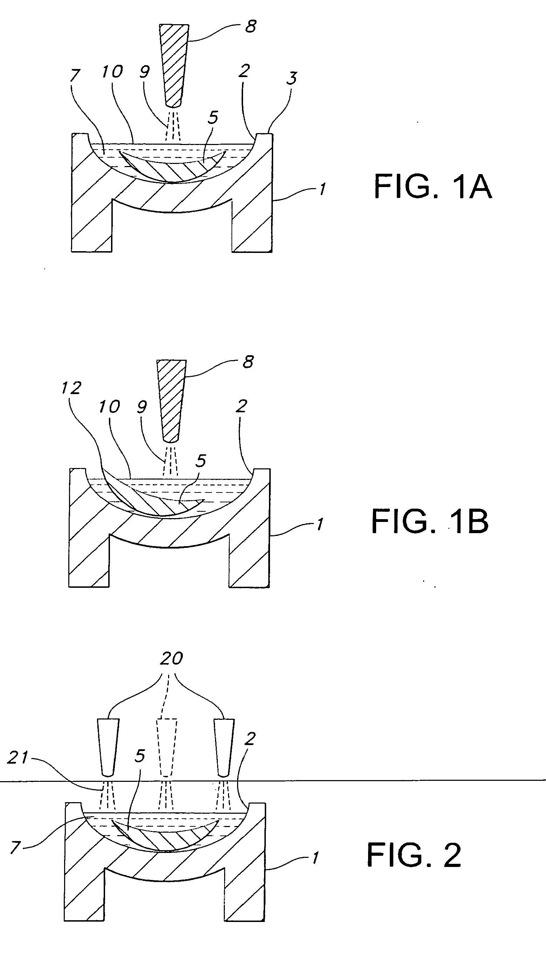

As seen in Figure 1A, blister package 1 includes a well 2 surrounded by flange 3. Well 2 is designed to hold a contact lens 5 and aqueous packaging solution 7 therein, and flange 3 serves as a surface for sealing lidstock to the package. The packaging solution is added to the well 2 by an injection nozzle 8, which directs a stream 9 of the packaging solution on to contact lens 5, thus filling well 2 until the solution reaches fill line 10. Typically, the amount of packaging solution is a metered dose. Conventionally, the well 2 of blister package 1 is aligned centrally with nozzle 8, as seen in Figure 1A.

Figure 1B illustrates a problem that may arise in using the apparatus shown in Figure 1A. In Figure 1B, contact lens 5 is not centered in well 2. As stream 9 of package solution is injected on to contact lens 5 from nozzle 8, the pressure of the stream may actually maintain contact lens 5 is the non-centered position. Accordingly, portion 12 of contact lens remains above fill line 10.

EP-A1048443 discloses a method according to the preamble of claim 1 and an assembly according to the preamble of claim 9.

### Summary of the Invention

This invention provides a method that solves the aforementioned problems, resulting in improved yields, a higher quality product, and a more efficient manufacturing process.

The method of this invention comprises filling a well with aqueous solution according to claim 1.

The injection nozzles are preferably arranged such that at least one of the streams will inject aqueous solution on to the contact lens, serving to center the contact lens in the well.

The well may be part of a contact lens blister package, further comprising a flange surrounding the well. Lidstock may be sealed against the flange, after filling the well of the blister package with the aqueous solution. When used as the final solution for packaging the contact lens in the blister package, the solution is preferably buffered saline solution. Packages sealed with lidstock may be sterilized, for example, by autoclaving the blister package and its contents.

The method also includes evacuating the aqueous solution from the well, and refilling the well with additional aqueous solution. Multiple cycles of filling and evacuating may be used to extract residual materials from the contact lens.

The invention also provides an assembly according to claim 9. The holder may have the form of a well of a blister package.

### Brief Description of the Drawing Figures

Figure 1A is a cross-sectional view of a conventional apparatus for filling a contact lens blister package with solution.
Figure 1B is a cross-sectional view of the apparatus of Figure 1A where the contact lens is not centered.
Figure 2 is a cross-sectional view of an apparatus and method according to various preferred embodiments of this invention.

### Detailed Description of Various Preferred Embodiments

The majority of contact lenses sold today are made of soft hydrogel materials. Hydrogels are a cross-linked polymeric system that absorbs and retains water, typically 10 to 80 percent by weight, and especially 20 to 70 percent water. Hydrogel lenses are commonly prepared by polymerizing a lens-forming monomer mixture including at least one hydrophilic monomer, such as 2-hydroxyethyl methacrylate, N,N-dimethylacrylamide, N-vinyl-2-pyrrolidone, glycerol methacrylate, and methacrylic acid. In the case of silicone hydrogel lenses, a silicone-containing monomer is copolymerized with the hydrophilic monomers.

Various processes are known for manufacturing contact lenses. One process, referred to as static cast molding, involves casting a mixture of lens-forming monomers in a two-part mold. One mold part includes a molding surface for forming the front lens surface, and the second mold part includes a molding surface for forming the back lens surface. The monomer mixture is polymerized, or cured, while in the two-part mold to form a contact lens. After casting and polymerization, the lens is separated from the mold.

Following casting of the contact lens, the cast lens is subjected to various downstream processes. In the case of non-silicone hydrogel contact lenses, the lenses are typically extracted with water or an aqueous solution to remove any impurities and to hydrate the lens. Such extraction and hydration processes may be formed as a combined, single operation or as multiple, separate operations. Then, the lens is typically inspected, either manually or with automation, and packaged for sale in a sealed package. In the case of silicone hydrogel contact lenses, the lenses generally require a more rigorous extraction process, employing an organic solvent to remove impurities such as unreacted monomers or oligomers formed as byproducts of the polymerization process. Then, the lenses are subjected to one or more hydration steps where the lens are contacted with water or an aqueous solution, so as to hydrate the lens and replace the organic solvent used in the prior extraction step.

Figure 2 illustrates an assembly according to various preferred embodiments. This assembly may be used to extract a soft hydrogel contact lens with an aqueous solution and/or to hydrate such a contact lens in an aqueous packaging solution.

Blister package 1 includes well 2 which contains a soft contact lens 5. Multiple injection nozzles 20, three in the illustrated embodiment, are arranged in a circular array. In other words, the well 2 is positioned beneath the injection nozzles 20, such that this circular array of nozzles surrounds the center of well 2.

Each nozzle 20 injects a stream 21 of aqueous solution 7 into the well. The amount of solution injected by nozzles 20 may be metered so that a predetermined amount of aqueous solution is dosed into well 2. Even if contact lens 5 is initially not centered in well 2, the array of streams from the injection nozzles will serve to center the contact lens, or, at least position the contact lens more to the center and away from the sides of the well, as the well is filled with the aqueous solution.

Figure 2 illustrates the contact lens contained in the well of a blister package. The solution introduced by the nozzles may be a packaging solution, such as buffered saline solution. In such a case, after filling the well, the packages may be sealed with lidstock and sterilized, for example, by autoclaving the blister package and its contents. Lidstock may be sealed against the flange surrounding well 2.

The assembly shown in Figure 2 may also be used for extracting a contact lens contained in the well with an aqueous solution other than the final packaging solution. For example, distilled water or other aqueous solution may be added to well, and then this solution may be evacuated. Multiple cycles of filling and evacuating may be used to extract residual materials from the contact lens.

Although Figure 2 illustrates the contact lens contained in the well of a blister package, the well may be formed in other types of lens carriers or holders, such as a tray.

## Claims

1. A method comprising filling a well of a lens holder with aqueous solution, the well containing a contact lens, **characterized by**, that at least three injection nozzles inject streams of the aqueous solution into the well and wherein the injection nozzles are arranged in a circular array.

2. The method according to claim 1, wherein the injection nozzles are arranged such that at least one of the streams will inject aqueous solution on to the contact lens.

3. The method according to claim 2, wherein injection of the streams of the aqueous solution center the contact lens in the well.

4. The method according to claim 1, wherein the well is included in a blister package.

5. The method according to claim 1, further comprising sealing lidstock on to a flange of the blister package after filling the well of the blister package with the aqueous solution.

6. The method according to claim 5, further comprising autoclaving the blister package and its contents after sealing the lidstock to the flange.

7. The method according to claim 1, further comprising evacuating the aqueous solution from the well, and refilling the well with additional aqueous solution.

8. The method according to claim 1, wherein the aqueous solution comprises buffered saline solution and the well is included in a blister package.

9. An assembly comprising: a lens holder comprising a well that contains a contact lens; and a nozzle assembly positionable in alignment with the well, **characterised by** that the nozzle assembly includes at least three injection nozzles for directing streams of aqueous solution into the well and wherein the injection nozzles are arranged in a circular array.

10. The assembly according to claim 9, wherein the holder is a blister package including the well and a flange surrounding the well.

11. The assembly according to claim 9, wherein the injection nozzles are arranged such that when the holder is positioned in alignment with the well, at least one of the streams will inject aqueous solution on to the contact lens.

## Patentansprüche

1. Verfahren umfassend das Befüllen einer Vertiefung eines Kontaktlinsenbehältnisses mit einer wässrigen Lösung, wobei die Vertiefung eine Kontaktlinse enthält, **gekennzeichnet dadurch, dass** mindestens drei Einspritzdüsen Ströme der wässrigen Lösung in die Vertiefung injizieren und wobei die Einspritzdüsen in einer kreisförmigen Anordnung angeordnet sind.

2. Verfahren gemäß Anspruch 1, wobei die Einspritzdüsen derart angeordnet sind, dass zumindest einer der Ströme wässrige Lösung auf die Kontaktlinse spritzt.

3. Verfahren gemäß Anspruch 2, wobei die Einspritzung der Ströme der wässrigen Lösung die Kontaktlinse in der Vertiefung zentriert.

4. Verfahren gemäß Anspruch 1, wobei die Vertiefung Bestandteil einer Blisterverpackung ist.

5. Verfahren gemäß Anspruch 1, das ferner das Versiegeln der Deckelfolie auf dem Rand der Blisterverpackung nach dem Befüllen der Vertiefung der Blisterverpackung mit der wässrigen Lösung umfasst.

6. Verfahren gemäß Anspruch 5, das ferner das Autoklavieren der Blisterverpackung und ihres Inhalts nach dem Versiegeln der Deckelfolie auf dem Randbereich umfasst.

7. Verfahren gemäß Anspruch 1, das ferner das Entfernen der wässrigen Lösung aus der Vertiefung und das Wiederbefüllen der Vertiefung mit zusätzlicher wässriger Lösung umfasst.

8. Verfahren gemäß Anspruch 1, wobei die wässrige Lösung eine gepufferte Salzlösung umfasst und die Vertiefung Bestandteil einer Blisterverpackung ist.

9. Anordnung umfassend: einen Kontaktlinsenbehälter, der eine Vertiefung umfasst, die eine Kontaktlinse enthält; und eine Düsenanordnung, die in Anpassung mit der Vertiefung positionierbar ist, **gekennzeichnet dadurch, dass** die Düsenanordnung mindestens drei Injektionsdüsen umfasst, um die Ströme der wässrigen Lösung in die Vertiefung zu steuern und wobei die Einspritzdüsen in einer kreisförmigen Anordnung angeordnet sind.

10. Anordnung gemäß Anspruch 9, wobei der Behälter eine Blisterverpackung ist, die eine Vertiefung und einen Randbereich, der die Vertiefung umgibt, umfasst.

11. Anordnung gemäß Anspruch 9, wobei die Einspritzdüsen derart angeordnet sind, dass wenn der Behälter in Anpassung mit der Vertiefung positioniert wird, mindestens einer der Ströme wässrige Lösung auf die Kontaktlinse spritzt.

## Revendications

1. Procédé consistant à remplir un puits d'un support de lentille avec une solution aqueuse, le puits contenant un lentille de contact, **caractérisé en ce qu'**au moins trois buses d'injection injectent des courants de la solution aqueuse dans le puits et dans lequel les buses d'injection sont disposées selon une matrice circulaire.

2. Procédé selon la revendication 1, dans lequel les buses d'injection sont disposées de telle sorte qu'au moins un des courants injecte la solution aqueuse sur la lentille de contact.

3. Procédé selon la revendication 2, dans lequel l'injection des courants de la solution aqueuse est centrée sur la lentille de contact dans le puits.

4. Procédé selon la revendication 1, dans lequel le puits est inclus dans un emballage-coque.

5. Procédé selon la revendication 1, consistant en outre à sceller la bande d'operculage sur un rebord de l'emballage-coque après remplissage du puits de l'emballage-coque avec la solution aqueuse.

6. Procédé selon la revendication 5, consistant à outre à autoclaver l'emballage-coque et son contenu après avoir scellé la bande d'operculage sur le rebord.

7. Procédé selon la revendication 1, consistant en outre à évacuer la solution aqueuse du puits et à remplir à nouveau le puits avec d'autre solution aqueuse.

8. Procédé selon la revendication 1, dans lequel la solution aqueuse comprend une solution saline tamponnée et le puits est inclus dans un emballage-coque.

9. Ensemble comprenant : un support de lentille comprenant un puits qui contient une lentille de contact ; et un ensemble de buses positionnables en alignement avec le puits, **caractérisé en ce que** l'ensemble de buses comprend au moins trois buses d'injection pour diriger des courants de solution aqueuse dans le puits et dans lequel les buses d'injection sont disposées selon une matrice circulaire.

10. Ensemble selon la revendication 9, dans lequel le support est un emballage-coque comprenant le puits et un rebord entourant le puits.

11. Ensemble selon la revendication 9, dans lequel les buses d'injection sont disposées de telle sorte que lorsque le support est positionné en alignement avec le puits, au moins un des courants injecte la solution aqueuse sur la lentille de contact.
